# EUROPÄISCHE PATENTSCHRIFT

(11) **EP 2 769 851 B1**
(45) Veröffentlichungstag und Bekanntmachung des Hinweises auf die Patenterteilung: **23.11.2016**
(21) Anmeldenummer: 14156219.9
(22) Anmeldetag: 21.02.2014
(51) Int. Cl.: B60B 1/04, B60B 21/06

(54) **LAUFRAD FÜR WENIGSTENS TEILWEISE MUSKELBETRIEBENE FAHRZEUGE UND INSBESONDERE FAHRRÄDER**
RUNNING WHEEL FOR AT LEAST PARTIALLY MUSCLE-POWERED VEHICLES, ESPECIALLY BICYCLES
ROUE MOBILE POUR VÉHICULES ENTRAÎNÉS AU MOINS PARTIELLEMENT PAR LA FORCE MUSCULAIRE, NOTAMMENT POUR VÉLOS

(30) Priorität: 22.02.2013 DE 102013002968
(43) Veröffentlichungstag der Anmeldung: 27.08.2014
(73) Patentinhaber: DT Swiss AG, 2504 Biel (CH)
(72) Erfinder: Walthert, Martin, 3270 Aarberg (CH); Spahr, Stefan, 2543 Lengnau (CH)
(74) Vertreter: BSB Intellectual Property Law

(56) Entgegenhaltungen:
- EP-A1- 0 860 301
- CH-A- 287 479
- CH-A- 355 041
- DE-U1- 20 313 846
- GB-A- 2 479 958

## Beschreibung

Die vorliegende Erfindung betrifft ein Laufrad für wenigstens teilweise muskelbetriebene Fahrzeuge und insbesondere für Fahrräder.

Eine solches Laufrad umfasst eine Felge, eine Nabe und eine Mehrzahl von Speichensystemen, welche die Felge mit der Nabe verbinden. Jedes Speichensystem weist eine Speiche und einen Speichennippel auf. Wenigstens ein Speichensystem umfasst eine Verstärkungseinheit mit einem Durchgangsloch. Das Laufrad kann als Hinterrad oder auch als Vorderrad ausgeführt sein.

Im Stand der Technik sind verschiedenste Laufräder von Fahrrädern bekannt geworden. Meist werden Hohlkammerfelgen eingesetzt, bei denen die Speichennippel im Hohlkammerbereich zwischen dem Felgenboden und dem Felgenbett angeordnet sind. Zur Verstärkung des Felgenbodens können Felgenösen eingesetzt werden, die, wie z. B. in Fig. 6 der EP 0 715 001 B1 gezeigt, in radialer Richtung das Felgenbett mit dem Felgenboden verbinden. Die Felgenösen verstärken u. a. den Felgenboden.

Aus der gattungsgemäßen CH 355 041 A ist ein Speichenrad bekannt geworden, bei
dem in dem Hohlraum zwischen den beiden Felgenböden für jede Speiche ein Ankerelement mit einem Sitz für den Speichennippelkopf vorgesehen ist. Das Ankerelement ist rechteckig ausgebildet und weist eine kugelkalottenförmige Punzung mit einer Bohrung zur Durchführung der Speiche auf. Ein Speichennippel kann ohne Demontage des Reifens oder ohne Ablassen der Luft ausgewechselt werden.

Die DE 203 13 846 U1 offenbart eine Befestigungseinrichtung für eine Speiche an einem Einspurfahrzeuglaufrad mit einer tellerförmigen Beilagscheibe mit einer kreisförmigen Außenfläche und mehreren Absätzen auf der Innenfläche.

Mit der US 2003/0090141 A1 ist ein Rad für Fahrräder bekannt geworden, bei dem innerhalb des Hohlkammerbereiches der Felge eine zylindrische Abstandshülse zwischen dem Felgenboden und dem Speichennippel eingesetzt wird, um die Speiche an dem Übergang zwischen dem Gewindeabschnitt zum Verschrauben mit dem Speichennippel und dem ohne Gewinde versehenen Teil der Speiche zu entlasten. Die Anlagefläche des Speichennippels an der zylindrischen Abstandshülse kann kugelförmig sein, um eine winkelmäßige Ausrichtung der Speiche zu ermöglichen. Zur Gewährleistung der Funktion ist es bei der US 2003/0090141 A1 erforderlich, dass die zylindrische Abstandshülse eine solche Höhe hat, dass sich eine Biegung der Speiche im Bereich des Radius des Rades ergibt. Dabei hat sich für die zylindrische Abstandshülse eine Höhe von 5 mm als vorteilhaft herausgestellt. Ein solches Rad hat den Nachteil, dass der Hohlkammerbereich der Felge in radialer Richtung sehr hoch gestaltet sein muss, um die zylindrische Abstandshülse und den Speichennippel aufzunehmen.

Zur Verringerung des Gesamtgewichts eines Rades mit einer Metallfelge zeigt die EP 0 715 001 B1 in Figur 8 eine Felge, bei der eine chemische Nachbehandlung erfolgt ist, um Material der Felge so zu entfernen, dass nur an den Speichenlöchern verstärkte Bereiche zurückbleiben.

Alternativ dazu beschreibt die US 6,402,256 B1 eine mechanische Nachbearbeitung der Felgenwandstärke, sodass in den Bereichen der Speichenlöcher die Felgenwandstärke größer ist als in anderen Bereichen. Dadurch kann auch Gewicht an der Felge eingespart werden.

Die Felge gemäß der US 6,402,256 B1 und auch die Felge gemäß der EP 0 715 001 B1 können leicht und funktionell hergestellt werden, erfordern jedoch einen hohen Herstellungsaufwand und sind somit teuer.

Es ist deshalb die Aufgabe der vorliegenden Erfindung, ein Laufrad, insbesondere für ein Fahrrad zur Verfügung zu stellen, welches ein reduziertes Gewicht und eine hohe Stabilität bei geringem Aufwand ermöglicht.

Diese Aufgabe wird durch ein Laufrad für wenigstens teilweise muskelbetriebene Fahrzeuge und insbesondere Zweiräder mit den Merkmalen des Anspruchs 1 gelöst. Bevorzugte Weiterbildungen der Erfindung sind Gegenstand der Unteransprüche. Weitere Vorteile und Merkmale der Erfindung ergeben sich aus der allgemeinen Beschreibung und der Beschreibung des Ausführungsbeispiels.

Ein erfindungsgemäßes Laufrad für wenigstens teilweise muskelbetriebene Fahrzeuge und insbesondere Zweiräder umfasst eine Nabe und eine Felge mit einer Mehrzahl an Speichenlöchern und einer Mehrzahl von Speichensystemen zur Verbindung der Nabe mit der Felge. Ein Speichensystem umfasst wenigstens eine Speiche und einen Speichennippel. Wenigstens eine Verstärkungseinheit ist mit einem Durchgangsloch versehen und zwischen der Felge und dem Speichennippel vorgesehen bzw. angeordnet. Die Verstärkungseinheit ist scheibenartig und um wenigstens eine Längsachse in Umfangsrichtung gekrümmt ausgebildet. Die Verstärkungseinheit weist eine konvexe innere Felgenkontaktfläche zur Anlage an einem daran angepassten konkaven Ausrichtbereich der Felge auf. Die Verstärkungseinheit umfasst eine konkav ausgebildete Außenseite. An der Außenseite ist eine Nippelaufnahme an einer Vertiefung mit einer stärker gekrümmten konkaven Nippelkontaktfläche vorgesehen. Die Nippelaufnahme mit der stärker gekrümmten konkaven Nippelkontaktfläche dient zur Aufnahme eines entsprechend angepassten konvexen Auflagebereichs des Speichennippels.

Das erfindungsgemäße Laufrad hat viele Vorteile, da damit die Herstellung eines Rades mit hoher Stabilität und einem geringen Gesamtgewicht kostengünstig ermöglicht wird. Durch die nur scheibenartige ausgebildete Verstärkungseinheit wird ein geringes Gesamtgewicht erzielbar, da diese aufgrund ihrer Scheibenstruktur nur ein geringes Volumen und somit ein geringes Gewicht aufweist. Absätze oder Fortsätze an der Scheibenstruktur werden nicht benötigt, um die Verstärkungseinheit zu positionieren oder zu fixieren.

Dadurch, dass die Verstärkungseinheit um wenigstens eine Längsachse bzw. in Umfangsrichtung des Felgenbettes gekrümmt ausgebildet ist und eine konvexe, d. h. auswärts gewölbte Felgenkontaktfläche aufweist, kann eine optimale Anpassung an den konkaven Bereich, d. h. den einwärts gewölbten Bereich, der Felge vorgesehen werden. Es wird eine optimale Kraftüberleitung von dem Speichennippel über die Verstärkungseinheit auf den Felgenboden ermöglicht. Dazu muss sich die Verstärkungseinheit vorzugsweise nicht erst verformen. Die Struktur der Verstärkungseinheit wird vorzugsweise direkt an die Struktur der Felge angepasst. Dadurch liegt die Verstärkungseinheit beim Einlegen in die Felge im Wesentlichen passgenau an der Felge an.

Ein weiterer Vorteil ist, dass sich die Verstärkungseinheit gegenüber der Felge ausrichten kann, da die Konturen angepasst sind. Insbesondere ist die Kontur an Kreissegmente angenähert, sodass auch nach einer leichten Verschiebung der Verstärkungseinheit ein flächiger Kontakt erhalten bleibt.

Weiterhin ist es vorteilhaft, dass eine separate Ausrichtkontur oder Halterung der Verstärkungseinheit an dem Felgenbett nicht erforderlich ist. Die Verstärkungseinheit benötigt keine besondere Ausrichthilfe, sondern richtet sich bei der Montage von selbst optimal aus.

Ein erheblicher Vorteil wird durch die konkav ausgebildete Außenseite mit der daran vorgesehenen Nippelaufnahme mit einer stärker gekrümmten konkaven Nippelkontaktfläche erzielt. Der an der Nippelaufnahme aufgenommene Speichennippel kann sich gegenüber der Verstärkungseinheit ausrichten. Der konvexe Auflagebereich des Speichennippels kann sich gegenüber der konkaven Nippelkontaktfläche ausrichten. Dadurch kann die Speiche unter unterschiedlichen Winkeln zur Felge ausgerichtet werden. Die selbe Verstärkungseinheit eignet sich für den Einsatz an unterschiedlichen Laufrädern. Laufräder, die zwar die gleiche Felge, aber unterschiedliche Geometrien der Einspeichung aufweisen, können mit demselben Typ von Verstärkungseinheit ausgerüstet werden. Auch bei Einsatz unterschiedlicher Naben, die sich z. B. in dem axialen Abstand der Speichenanschlüsse und/oder dem radialen Durchmesser der Speichenanschlüsse und/oder dem radialen Durchmesser der Nabenflansche unterscheiden, können gleiche Verstärkungseinheiten eingesetzt werden. Das führt zu günstigeren Herstellkosten und einer geringeren Anzahl zu bevorratender Teile.

Außerdem wird die Auflagefläche des Nippels auf der Verstärkungseinheit optimal vergrößert, sodass ein erheblich geringerer Flächendruck vorliegt.

Es werden zwei separate und voneinander unabhängige Ausrichtmöglichkeiten gegeben. Die Verstärkungseinheit kann sich gegenüber der Felge ausrichten und der Speichennippel kann sich gegenüber der Verstärkungseinheit ausrichten. Insgesamt wird eine optimale Ausrichtung bei optimaler Kraftübertragung ermöglicht, sodass leichte und feste Laufräder realisiert werden können.

Vorzugsweise weist die Verstärkungseinheit nur eine Dicke auf, die kleiner als der maximale Durchmesser der Speiche und insbesondere kleiner als der maximale Durchmesser des Speichenschaftes ist. Dadurch nimmt die Verstärkungseinheit nur wenig Volumen ein, was auch bei dem Einsatz von Stahl als Material für die Verstärkungseinheit nur ein geringes Gewicht erzeugt, sodass insgesamt ein besonders leichtes Laufrad herstellbar ist.

Durch die scheibenartige Struktur der Verstärkungseinheit und die an die Felge angepasste Kontaktfläche wird eine optimale Überleitung der Kräfte ermöglicht, wodurch die Wandstärke der Felge optimiert werden kann.

Vorzugsweise werden Felgen aus Metall eingesetzt, die aus einem Stranggussprofil hergestellt werden. Als Rohling der Felge wird dann ein Stück des Stranggussprofils eingesetzt, welches über seiner Länge grundsätzlich an jeder Stelle des Querschnitts gleichbleibende Wandstärken aufweist. Das bedeutet, dass jeder Querschnitt identisch ist, abgesehen von den Speichenlöchern.

Deshalb bedeutet bereits eine geringere Verringerung der Wandstärke der Felge im Bereich des Felgenbodens eine erhebliche Gewichtsreduktion der Felge insgesamt, da diese Wandstärke über dem gesamten Umfang entsprechend reduziert wird. Außerdem wird die Masse des Laufrades verringert, die von der Achse beabstandet ist. Dadurch wird das Trägheitsmoment des Laufrades reduziert, was die Dynamik des Laufrades verbessert.

Durch die Verstärkungseinheiten wird nun die Wandstärke genau an den Stellen erhöht, wo eine höhere Festigkeit benötigt wird. Gleichzeitig wird für die Verstärkungseinheiten vorzugsweise ein festeres Material wie Stahl eingesetzt, während der Rohling bzw. Körper der Felge an sich vorzugsweise aus einem Leichtmetall oder einer Leichtmetalllegierung besteht. Das Ergebnis ist ein leichtes und stabiles Laufrad, welches einfach zu fertigen ist.

Die Dicke der Wandstärke der Felge insbesondere im Bereich des Felgenbodens kann gegenüber herkömmlichen Wandstärken reduziert werden. Verringerungen der Wandstärke um 10% und sogar 20% oder mehr sind möglich.

Das erfindungsgemäße Laufrad besteht aus einfachen Komponenten, die kostengünstig hergestellt werden können und gleichzeitig eine beträchtliche Gewichtseinsparung ermöglichen. Aufwendige Formen oder spanende oder chemische Nachbearbeitungen der Felge, der Speichennippel oder der Verstärkungseinheiten sind nicht nötig. Es werden regelmäßig mehrere oder es wird eine Vielzahl von Verstärkungseinheiten pro Laufrad eingesetzt. Die sehr günstigen Herstellkosten der Verstärkungseinheiten wirken sich so vielfach aus, was für den Hersteller und Verbraucher vorteilhaft ist. Gleichzeitig wird die Stabilität des Laufrades erhöht und es kann die Wandstärke der Felge z. B. im Bereich des Felgenbettes verringert werden. Spanende Bearbeitungen der Felgenform sind dazu nicht nötig.

Die Felge ist insbesondere als Hohlkammerfelge mit wenigstens einer Hohlkammer ausgebildet. Die Verstärkungseinheit ist bzw. die Verstärkungseinheiten sind vorzugsweise im Inneren der Hohlkammer angeordnet und ragen besonders bevorzugt nicht in Öffnungen der Felge hinein oder dadurch hindurch. Die Verstärkungseinheiten sind vorzugsweise vollständig im Inneren der Hohlkammer angeordnet.

Obwohl das Bedürfnis zur Gewichtseinsparung schon lange besteht, wurden bislang nur erheblich kompliziertere Lösungen bekannt, die außerdem ein höheres Gewicht aufweisen.

Erfindungsgemäß ändert sich die Dicke der Verstärkungseinheit abgesehen von einer verjüngten zentralen Nippelaufnahme über der gesamten Verstärkungseinheit um weniger als 25 %.

Die Vertiefung mit der Nippelaufnahme kann ausgefräst sein. Die Vertiefung kann auch als Stauchung ausgebildet sein. Die Vertiefung kann geprägt oder geschmiedet sein.

In bevorzugten Ausgestaltungen stehen die Speichennippel durch die Speichenlöcher in der Felge radial nach innen über. Am radial inneren Ende der Speichennippel ist vorzugsweise ein Werkzeugende vorgesehen, welches mit einem Werkzeug z. B. formschlüssig gegriffen werden kann. Der radial nach innen überstehende Teil ist insbesondere länger als 1 / 4 einer Gesamtlänge des Speichennippels in radialer Richtung.

In vorteilhaften Weiterbildungen unterscheidet sich die Anzahl der Anzahl der Speichennippel von der Anzahl der Verstärkungseinheiten. Das bedeutet, dass die Verstärkungseinheiten nur an einem Bruchteil der Speichennippel angeordnet sind. Insbesondere kann die Anzahl der Speichennippel größer sein als die Anzahl der Verstärkungseinheiten. Möglich ist es, dass Verstärkungseinheiten nur an einzelnen Speichen vorgesehen sind. Beispielsweise können an Speichen mit geringer Belastung keine Verstärkungseinheiten vorgesehen sein.

Möglich ist es, dass bei bestimmten und z. B. radial ausgerichteten Speichen keine Verstärkungseinheiten oder dünnere oder leichtere Verstärkungseinheiten vorgesehen sind. An stärker belasteten Speichen, die z. B. auch eine tangentiale Ausrichtung aufweisen, können stärkere oder größere Verstärkungseinheiten vorgesehen sein. Dann erfolgt eine lokale Verstärkung der Felge in Abhängigkeit von der Belastung.

Vorzugsweise ist an wenigstens einem Speichenloch keine Verstärkungseinheit vorgesehen. Vorzugsweise liegt an wenigstens einem Speichenloch der Speichennippel auf dem Rand des Speichenlochs aufliegt.

In allen Ausgestaltungen ist es möglich, dass unterschiedliche und insbesondere wenigstens zwei unterschiedliche Verstärkungseinheiten vorgesehen sind, die sich in wenigstens einer Abmessung und/oder dem Material unterscheiden. Möglich ist es, dass sich wenigstens zwei Verstärkungseinheiten in ihrer Größe, Länge, Breite und/oder Dicke unterscheiden.

Die Felge besteht vorzugsweise im Wesentlichen aus einem Stranggussprofil aus insbesondere wenigstens einem Leichtmetall. Vorzugsweise erstreckt sich die stärker gekrümmte konkave Nippelkontaktfläche wenigstens in einer Richtung quer zu der Längsachse. Im montierten Zustand ist die Längsachse insbesondere entlang des Umfangs der Felge ausgerichtet, sodass die stärker gekrümmte konkave Nippelkontaktfläche sich parallel oder doch wenigstens etwa parallel zu einer Symmetrieachse der Felge und/oder des Laufrades erstreckt. Dadurch wird eine winkelmäßige Ausrichtung einer Speiche zu einem rechten oder linken Ende und somit z. B. zu beiden Nabenflanschen einer entsprechenden Nabe ermöglicht. Die Speiche muss dann nicht gebogen werden, sondern kann sich in gerader Linie zwischen der Felge und der Nabe erstrecken, wodurch die Haltbarkeit und die Belastbarkeit gesteigert werden.

Eine Dicke wenigstens einer Verstärkungseinheit ist insbesondere kleiner als ein Viertel der Breite und insbesondere auch kleiner als ein Viertel der Länge der Verstärkungseinheit. Besonders bevorzugt ist die Verstärkungseinheit oval oder rund ausgebildet und weist eine Länge und/oder Breite zwischen etwa 7 mm und 14 mm auf. In bevorzugten Ausgestaltungen ist eine maximale Erstreckung der Verstärkungseinheit kleiner als ein doppelter maximaler Durchmesser des Speichennippels.

In bevorzugten Ausgestaltungen weist wenigstens eine Verstärkungseinheit eine maximale Dicke kleiner als 2,0 mm und vorzugsweise kleiner 1,5 mm und insbesondere kleiner 1,0 mm auf. Dadurch wird eine besonders dünne und somit leichte Verstärkungseinheit ermöglicht, die zu einer erheblichen Gewichtsreduktion des gesamten Laufrads beiträgt. Dazu trägt insbesondere die scheibenartige Struktur mit geringer Dicke bei. Eine dünne und flache Verstärkungseinheit verbessert die Montierbarkeit, da sie bei einer Hohlkammerfelge leichter durch das Loch in dem Felgenbett in die Hohlkammer eingeführt werden kann.

Wenn unterschiedliche Verstärkungseinheiten vorgesehen sind, können sich z. B. in ihrer Dicke und oder in ihrer Länge und Breite unterscheiden. Beispielsweise können an stärker belasteten Stellen um 25% oder 50% dickere Verstärkungseinheiten vorgesehen sein. Möglich ist es auch, dass die Auflagefläche der Verstärkungseinheiten sich um 25% oder 50% unterscheidet. Möglich sind auch Kombinationen von Variationen der Auflagefläche und der Dicke.

Wenigstens eine Verstärkungseinheit besteht und insbesondere alle Verstärkungseinheiten können aus Faserverbundwerkstoffen oder Naturstoffen bestehen. Vorzugsweise bestehen die Verstärkungseinheiten aus Metall und insbesondere aus Stahl. Die Felge besteht vorzugsweise wenigstens teilweise aus Metall und/oder wenigstens einem Faserverbundwerkstoff.

Eine minimale Dicke der Verstärkungseinheit an der Nippelaufnahme beträgt vorzugsweise zwischen einem Drittel und zwei Drittel einer maximalen Dicke der Verstärkungseinheit. Eine minimale Dicke der Verstärkungseinheit beträgt vorzugsweise wenigstens 0,2 mm. Zu geringe Wandstärken können die Reproduzierbarkeit der Funktionen gefährden. Die jeweilige minimale Wandstärke hängt aber auch von dem eingesetzten Material ab und kann bei besonders stabilen Materialien auch geringer sein.

Vorzugsweise weist die konkav ausgebildete Nippelkontaktfläche der zentralen Nippelaufnahme einen Krümmungsradius auf, der weniger als die Hälfte des Krümmungsradius der konkav ausgebildeten Außenseite der Verstärkungseinheit beträgt. Dadurch wird an der insgesamt gekrümmten Verstärkungseinheit eine Nippelaufnahme definiert, die als Ausnehmung innerhalb des Materials der scheibenartigen Verstärkungseinheit vorgesehen ist. Das bedeutet, dass die Krümmung der Nippelkontaktfläche stärker ausgebildet ist als die Krümmung der konkaven Außenseite insgesamt. Die Nippelaufnahme kann beispielsweise als kugelförmiger Sitz ausgebildet sein, wobei der Radius des kugelförmigen Sitzes größer als der Radius des Durchgangsloches ist.

Vorzugsweise ist der Mittelpunkt der Nippelaufnahme in einem solchen Abstand von der Verstärkungseinheit angeordnet, dass ein Umfangssegment im Bereich der Nippelaufnahme im Wesentlichen vollständig innerhalb der Scheibenstruktur der Verstärkungseinheit liegt.

In allen Ausgestaltungen ist es bevorzugt, dass ein Krümmungsradius der konkaven Nippelkontaktfläche der Verstärkungseinheit zwischen 2 mm und 4 mm beträgt. Vorzugsweise beträgt ein Krümmungsradius der konvex ausgebildeten inneren Felgenkontaktfläche der Verstärkungseinheit und/oder ein Krümmungsradius der konkav ausgebildeten Außenseite der Verstärkungseinheit zwischen 4 mm und 20 mm.

Vorzugsweise ist die Felge als Hohlkammerfelge ausgebildet und weist eine Breite zwischen 15 und 40 mm und insbesondere zwischen 16 und 38 mm und vorzugsweise zwischen 17 mm und 36 mm auf.

Eine Höhe der Hohlkammerfelge beträgt insbesondere mind. 18 mm und vorzugsweise wenigstens 20 mm. Die Höhe kann bis zu 100 mm betragen. Vorzugsweise liegt die Höhe aber in einem Bereich zwischen etwa 20 und 40 mm.

Der Speichennippel weist vorzugsweise einen Kugelkopf und wenigstens einen Werkzeuganschluss auf, wie z. B. einen Torx oder einen Innensechskant, einen Außensechskant und/oder einen Vierkant. Insbesondere steht der Werkzeuganschluss wenigstens teilweise nach innen durch das Speichenloch über.

Weitere Vorteile und Merkmale der vorliegenden Erfindung ergeben sich aus der Beschreibung des Ausführungsbeispiels, das im Folgenden mit Bezug auf die beiliegenden Figuren erläutert wird.

In den Figuren zeigen:
- Fig. 1: ein mit erfindungsgemäßen Laufrädern ausgerüstetes stark schematisch dargestelltes Fahrrad;
- Fig. 2: ein weiteres mit erfindungsgemäßen Laufrädern ausgerüstetes stark schematisch dargestelltes Fahrrad;
- Fig. 3: einen Querschnitt durch ein erfindungsgemäßes Laufrad;
- Fig. 4: eine perspektivische Darstellung der Verstärkungseinheit des Laufrades nach Fig. 3;
- Fig. 5: eine Draufsicht auf die Verstärkungseinheit nach Fig. 3;
- Fig. 6: einen Querschnitt durch die Verstärkungseinheit nach Fig. 5;
- Fig. 7: eine stark schematisierte Seitenansicht eines erfindungsgemäßen Laufrades;
- Fig. 8: einen Querschnitt durch eine Verstärkungseinheit; und
- Fig. 9: einen Querschnitt durch eine weitere Verstärkungseinheit.

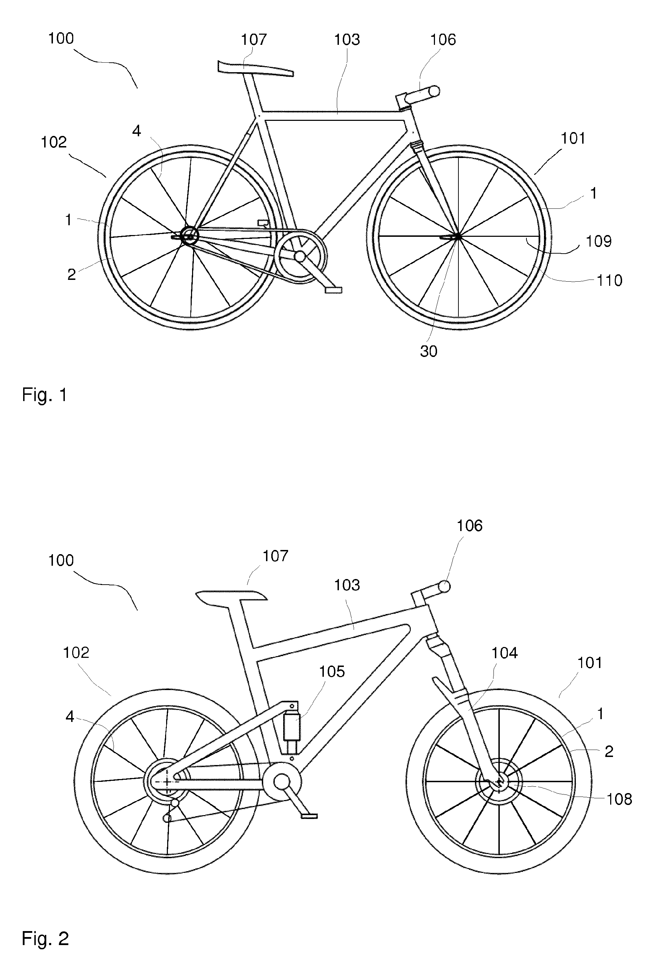

Mit Bezug auf die beiliegenden Figuren 1 bis 9 wird ein Ausführungsbeispiel einer erfindungsgemäßen Laufrades 1 anhand des Einsatzes an Fahrrädern 100 erläutert.

In Figur 1 ist ein als Touren- oder Rennrad abgebildetes Fahrrad 100 dargestellt, bei welchem das Vorderrad 101 und das Hinterrad 102 als erfindungsgemäße Laufräder 1 ausgeführt sind. Das Fahrrad weist einen Rahmen 103, einen Lenker 106 und einen Sattel 107 auf. Am Vorderrad 101 und am Hinterrad 102 ist jeweils eine Vielzahl an Speichensystemen 3 vorgesehen. Die Felge 2 ist jeweils über Speichen 4 mit der Nabe 30 verbunden. Am Vorderrad 101 ist hier eine radiale Verspeichung vorgesehen, während an dem Hinterrad 102 die Speichen wenigstens teilweise tangential an der Nabe 30 angeordnet sind, um die Übertragung von Drehmoment zu ermöglichen.

In Figur 2 ist einer schematischen Darstellung ein Mountainbike als Fahrrad 100 abgebildet. Das Vorderrad wird an einer Federgabel 104 gefedert gehalten, während für die Dämpfung des Hinterrades ein Dämpfer 105 zur Verfügung steht. Eine Scheibenbremse 108 dient zum Bremsen.

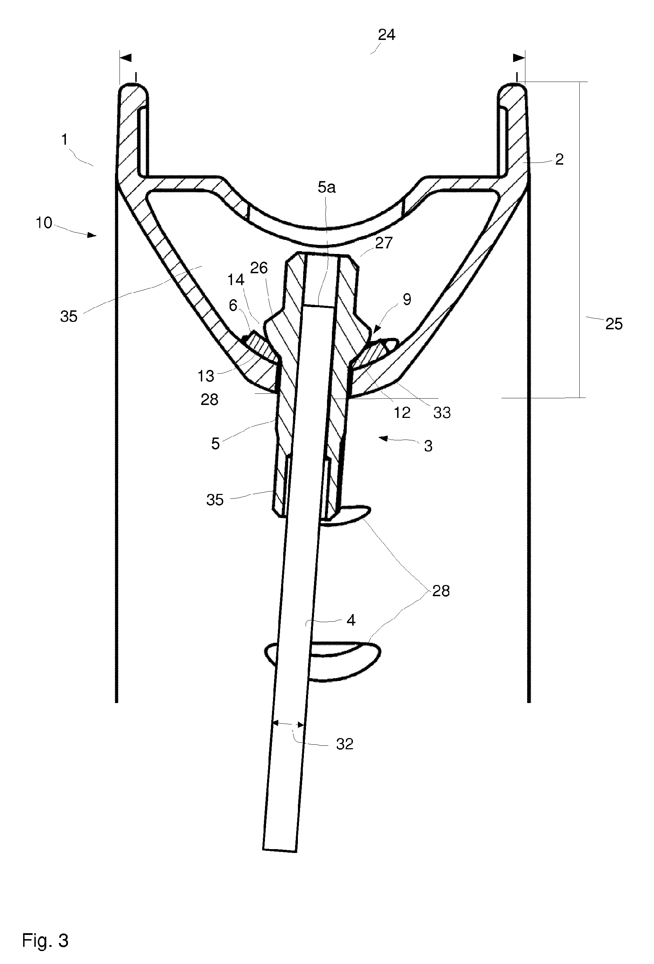

Figur 3 zeigt einen vergrößerten Querschnitt durch ein erfindungsgemäßes Laufrad 1 mit einer Felge 2 und einem Speichensystem 3 im Einbauzustand 10.

In dem Hohlkammerbereich 35 der Felge 2 ist an dem konkav ausgebildeten Felgenboden 13 eine scheibenartige Verstärkungseinheit 6 vorgesehen, die eine konvexe Felgenkontaktfläche 12 und eine konkav ausgebildete Außenseite 14 aufweist. Die konvexe Felgenkontaktfläche 12 ist an den konkav ausgebildeten Felgenboden 13 angepasst, sodass einerseits eine optimale Kraftüberleitung von der Verstärkungseinheit 6 auf den Felgenboden und andererseits auch eine winkelmäßige Ausrichtung der Verstärkungseinheit 6 gegenüber dem Felgenboden 33 ermöglicht wird. Dadurch wird eine besonders gute winkelmäßige Ausrichtung der Speiche 4 an dem Felgenbett 33 gewährleistet.

Das Speichensystem 3 umfasst einen Speichennippel 5 und die Speiche 4. Die Speiche 4 weist in einem Endbereich ein Außengewinde auf, welches in ein Innengewinde an dem Speichennippel 5 eingeschraubt ist. An dem radial äußeren Ende des Speichennippels 5 ist ein Werkzeuganschluss 27 vorgesehen, der mit einem Werkzeug gegriffen werden kann, um den Speichennippel 5 zu drehen und die Speiche 4 zu spannen. Beispielsweise kann der Speichennippel 5 einen Torx-Anschluss oder aber einen Innensechskant oder einen Außensechskant aufweisen. Auch andere Werkzeuganschlüsse sind möglich.

Der Speichennippel 5 umfasst einen Kugelkopf 26, dessen halbkugelartige Oberfläche an einer Vertiefung 15 mit einer konkaven Nippelkontaktfläche 16 aufgenommen ist. Die halbkugelartige Oberfläche des Kugelkopfs 26 bildet einen Auflagebereich 5a, an welchem der Speichennippel 5 auf der konkaven Nippelkontaktfläche 16 aufliegt. Durch die konkave Nippelkontaktfläche 16 wird in Zusammenwirkung mit der konvexen Oberfläche bzw. dem konvexen Auflagebereich 5a des Speichennippels 5 ebenfalls eine winkelmäßige Ausrichtung des Speichensystems 3 ermöglicht. Auch bei einer Winkelausrichtung der Speiche 4 ändert sich deren effektive Länge nicht.

Der Speichennippel 5 taucht durch ein Durchgangsloch 7 in der Verstärkungseinheit 6 und durch ein Speichenloch 28 in der Felge 2 durch die Felge 2 hindurch, sodass der Speichennippel 5 radial nach innen übersteht. Das ermöglicht eine kompakte Felge mit einer Hohlkammer von z. B. auch geringer Höhe.

An dem inneren Ende des Speichennippels 5 ist ein Vierkant 35 vorgesehen, der mit einem Werkzeug ergriffen werden kann, um beispielsweise ein Speichensystem 3 anzuziehen oder nachzustellen. Dadurch wird die Durchführung einer Wartung erheblich erleichtert. Während bei dem System nach der US 2003/0090141 A1 zunächst der Reifen entfernt werden muss, damit das Innere der Felge zugänglich ist, kann hier die Speiche 4 an dem Vierkant 35 oder einer Werkzeugkontur gespannt werden.

Die Breite 24 der Felge 2 beträgt hier im Ausführungsbeispiel vorzugsweise zwischen etwa 20 und 25 mm, kann aber grundsätzlich auch zwischen 17 und 36 mm betragen. Die Höhe 25 der Felge 2 von dem Felgenbett bis zu den Felgenhörnern beträgt hier etwas mehr als 20 mm und kann je nach Ausgestaltung auch deutlich größer werden.

Deutlich erkennbar ist in Fig. 3, dass die Dicke 8 der Verstärkungseinheit 6 überall kleiner ist als der Durchmesser 32 der Speiche 4. Bei Doppeldickspeichen kann die Verstärkungseinheit 6 auch eine geringere Dicke aufweisen als der dünnere Teil der Speiche 4.

Die Dicke 8 der Verstärkungseinheit 6 und die Dicke des Felgenbodens 33 sind derart aufeinander angepasst, dass insgesamt ein besonders geringes Gesamtgewicht erzielbar ist. Das wird maßgeblich auch dadurch erzielt, dass die Verstärkungseinheit 6 scheibenartig ausgebildet ist und sich nicht in das Speichenloch 28 der Felge 2 hinein erstreckt. Die Verstärkungseinheit 6 weist eine so geringe Dicke 8 auf, dass sie nur zu einem geringen Teil zum Gesamtgewicht des Laufrades 1 beiträgt. Die Verstärkungseinheiten 6 sind jeweils vollständig innerhalb der Hohlkammer 35 angeordnet.

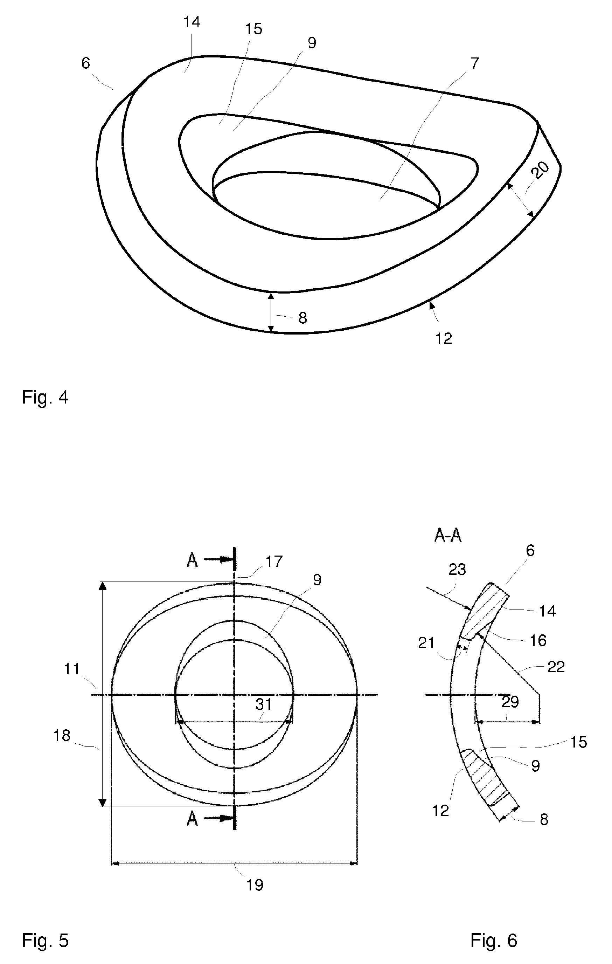

Fig. 4 zeigt eine schematische perspektivische Darstellung einer Verstärkungseinheit 6, wobei die gebogene und scheibenartige Struktur mit dem Durchgangsloch 7 deutlich wird. Die Verstärkungseinheit 6 weist eine Dicke 8 auf, die abgesehen von der zentralen Nippelaufnahme 9, hier konstant ist und der maximalen Dicke 20 der Verstärkungseinheit 6 entspricht. Die Dicke 8 beträgt hier im Ausführungsbeispiel etwa 0,9 mm und kann je nach Ausführungsform und Anwendungsfall auch etwas dünner oder dicker sein. Insbesondere ist die Dicke 8 der Verstärkungseinheit 6 dünner als ein maximaler Durchmesser einer Speiche 4 des zugehörigen Speichensystems 3 und insbesondere auch dünner als der Felgenboden 33, auf dem die Verstärkungseinheit 6 aufliegt. Die Verstärkungseinheit 6 kann auch Verstärkungsscheibe genannt werden. An besonders belasteten Stellen kann auch eine dickere und/oder größere Verstärkungseinheit 6 eingesetzt werden, bei der die Dicke und/oder Auflagefläche z. B. um 10%, 25% oder auch 50% vergrößert ist. An gering belasteten Stellen kann die Verstärkungseinheit 6 auch weggelassen werden oder eine dünnere und/oder kleinere Verstärkungseinheit 6 eingesetzt werden, bei der die Dicke und/oder Auflagefläche z. B. um 5%, 10% oder auch 25% verkleinert ist.

Die Verstärkungseinheit 6 weist eine konvexe Felgenkontaktfläche 12 auf, die im bestimmungsgemäß eingebauten Zustand 10 an dem Felgenboden 33 anliegt. Die Außenseite 14 der Verstärkungseinheit 6 ist vorzugsweise parallel oder wenigstens etwa parallel zu der Felgenkontaktfläche 12 ausgerichtet. Zentral an der Verstärkungseinheit 6 ist ein Durchgangsloch 7 angeordnet, um welches herum die Nippelaufnahme 9 vorgesehen ist. Die Nippelaufnahme 9 ist als konkave Vertiefung 15 auf der Außenseite 14 ausgebildet und weist eine konkav ausgebildete Nippelkontaktfläche 16 auf. Die Nippelkontaktfläche 16 weist einen deutlich kleineren Krümmungsradius 22 auf als der Krümmungsradius 23 der Felgenkontaktfläche 12 oder der Außenseite 14.

Fig. 5 zeigt eine Draufsicht auf die Verstärkungseinheit 6 aus den Fig. 3 und 4. Die Verstärkungseinheit 6 ist entlang einer Längsachse 11 spiegelsymmetrisch und gekrümmt ausgeführt. Quer zu der Längsachse 4 ist entlang einer Richtung 17 die Vertiefung 15 der Nippelaufnahme 9 ausgebildet.

Die Verstärkungseinheit 6 weist eine Länge 19 in Umfangsrichtung der Felge 2 und eine Breite 18 quer dazu auf. Die Verstärkungseinheit 6 kann aus einer ursprünglich kreisrunden flachen Scheibe hergestellt werden. Die Verstärkungseinheit 6 weist ein zentrales Durchgangsloch 7 auf, dessen Durchmesser 31 etwas größer ist als der Außendurchmesser des im Einbauzustand 10 durchtretenden Speichennippels 5, um auch eine winkelmäßige Ausrichtung der Speiche 4 gegenüber der Verstärkungseinheit 6 zu ermöglichen.

Insgesamt bietet das Speichensystem zwei Möglichkeiten zur Winkelausrichtung. Die Verstärkungseinheit 6 kann sich winkelmäßig gegenüber der Felge 2 ausrichten. Außerdem ist eine Ausrichtung des Winkels der Speiche 4 an der Verstärkungseinheit 6 möglich.

Fig. 6 zeigt einen Querschnitt entlang der Schnittlinien A-A aus Fig. 5. Die Verstärkungseinheit 6 weist an der Felgenkontaktfläche 12 und an der Außenseite 14 jeweils eine Krümmung mit einem Krümmungsradius 23 auf. Der Krümmungsradius 23 hängt vom konkreten Anwendungsfall ab und liegt im Ausführungsbeispiel in einem Bereich zwischen etwa 6 mm und 8 mm. Die Nippelaufnahme 9 weist eine stärker gekrümmte Nippelkontaktfläche 16 mit einem Krümmungsradius 22 auf, der deutlich kleiner als der Krümmungsradius 23 ist. Im Ausführungsbeispiel liegt der Krümmungsradius 22 zwischen etwa 2,5 mm und 4 mm und ist vorzugsweise nicht größer als halb so groß wie der Krümmungsradius 23.

Eine maximale Dicke 8 der abgebildeten Verstärkungseinheit 6 beträgt hier etwa 0,9 mm. Die minimale Dicke 21 der Verstärkungseinheit 6 liegt in einem Bereich von einem Drittel und zwei Dritteln der maximalen Dicke 8 und beträgt hier etwa 0,4 mm. Andere Verstärkungseinheiten 6 können größer oder kleiner und dicker oder dünner sein.

Der Abstand 22 zum Mittelpunkt der Nippelkontaktfläche 16 ist hier so gewählt, dass sich das Kreissegment mit der Nippelkontaktfläche 16 vollständig innerhalb der Außenkontur der Verstärkungseinheit 6 erstreckt. Das bedeutet, dass der Abstand 29 plus die Dicke 8 der Verstärkungseinheit 6 größer oder gleich sind als der Krümmungsradius 22.

Dadurch, dass der Speichennippel 5 radial nach innen aus der Felge 2 austritt und dadurch, dass die dünne scheibenartige Struktur an die Felgenkrümmung angepasst ist, kann ein besonders leichtes Laufrad 1 zur Verfügung gestellt werden, welches dennoch stabil ausgeführt ist. Da sich sowohl die Verstärkungseinheit 6 als auch der Speichennippel 5 winkelmäßig ausrichten können, kann ein Laufrad 1 bereitgestellt werden, das großen und auch großen dynamischen Belastungen bei geringem Gewicht standhält.

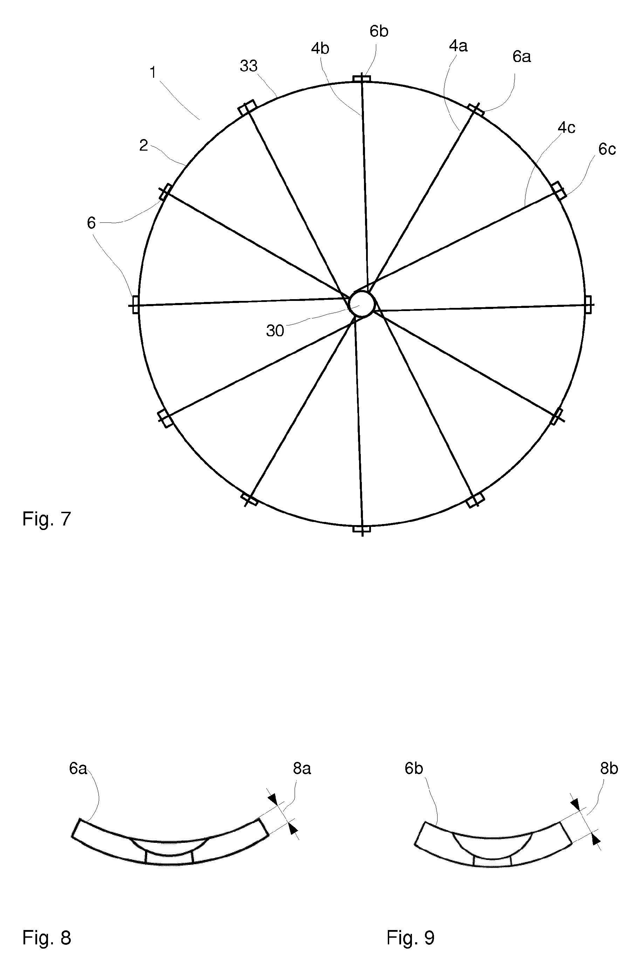

Fig. 7 zeigt eine stark schematisierte Seitenansicht eines Laufrades 1, an welchem sowohl radial ausgerichtete Speichen 4a, sehr leicht tangential ausgerichtete Speichen 4b und etwas stärker tangential ausgerichtete Speichen 4c vorgesehen sind. Durch die auch mit tangentialer Komponente ausgerichteten Speichen 4b und 4c können Drehmomente beim Beschleunigen und Abbremsen besser übertragen werden.

An dem nur schematisch dargestellten Felgenboden 33 sind für die unterschiedlichen Speichen 4a bis 4c unterschiedliche Verstärkungseinheiten 6a bis 6c vorgesehen. Die Verstärkungseinheiten 6a bis 6c unterscheiden sich untereinander in wenigstens einer Eigenschaft und insbesondere in wenigstens einer Abmessung.

Vorzugsweise ist die Felgenkontaktfläche 12 der Verstärkungseinheiten 6a bis 6c als Auflagefläche auf dem konkaven Felgenboden 33 unterschiedlich groß ausgebildet, um bei den Speichen 4b, 4c mit größeren Belastungen eine größere Fläche zur Überleitung der Kräfte zur Verfügung zu stellen. Bevorzugt ist es auch, dass sich die Dicken 8a, 8b und 8c der Verstärkungseinheiten 6a bis 6c untereinander unterscheiden. Vorzugsweise sind die Dicken 8b, 8c der Speichen 4b, 4c größer als die Dicke 8a der Verstärkungseinheit 6a.

An den weniger belasteten Speichen, wie z. B. der Speiche 4a ist es auch möglich, gar keine Verstärkungseinheit 6a vorzusehen, sodass der Speichennippel direkt auf dem Speichenloch 28 in der Felge 2 aufliegt. Dann ist die Anzahl der Speichennippel 5 des Laufrades 1 größer als die Anzahl der Verstärkungseinheiten 6.

In allen Ausgestaltungen ist eine Verstärkungseinheit 6 genau für einen Speichennippel vorgesehen. Dadurch kann Gewicht gegenüber Verstärkungselementen eingespart werden, bei denen zwei oder mehr Speichennippel an einem Verstärkungselement gehalten und unterstützt werden. Solche Verstärkungselemente, die zwei oder mehr Speichennippel halten, müssen deutlich größer und stärker ausgebildet werden, sodass sie erheblich mehr wiegen.

Figuren 8 und 9 zeigen zwei Variationen von Verstärkungseinheiten 6a und 6b, die sich in ihren Abmessungen unterscheiden. Die Verstärkungseinheit 6a ist dünner ausgebildet und die Verstärkungseinheit 6b dicker. Die maximale Dicke liegt hier in beiden Fällen unter 2 mm und beträgt jeweils mehr als 0,5 mm.

Durch variable Ausgestaltungen der Verstärkungseinheiten 6 kann ein optimales Gesamtgewicht des Laufrades 1 erzielt werden. Die Felgenwandstärke kann auf ein Minimum verringert werden. An einzelnen oder mehreren Stellen, z. B. bei rein radial ausgerichteten Speichen oder bei Speichen mit geringerer Belastung, kann auf Verstärkungseinheiten 6 vollständig verzichtet werden.

**Bezugszeichenliste:**

| | | | |
|---|---|---|---|
| 1 | Laufrad | 20 | maximale Dicke |
| 2 | Felge | 21 | minimale Dicke |
| 3 | Speichensystem | 22 | Krümmungsradius |
| 4 | Speiche | 23 | Krümmungsradius |
| 4a | radiale Speiche | 24 | Breite der Felge |
| 4b | tangentiale Speiche | 25 | Höhe der Felge |
| 4c | tangentiale Speiche | 26 | Kugelkopf |
| 5 | Speichennippel | 27 | Werkzeuganschluss |
| 5a | Auflagebereich | 28 | Speichenloch |
| 6 | Verstärkungseinheit | 29 | Abstand |
| 6a | Verstärkungseinheit | 30 | Nabe |
| 6b | Verstärkungseinheit | 31 | Durchmesser |
| 6c | Verstärkungseinheit | 32 | Durchmesser der Speiche |
| 7 | Durchgangsloch | 33 | Felgenboden |
| 8 | Dicke | 34 | Felgenbett |
| 9 | Nippelaufnahme | 35 | Hohlkammer |
| 10 | Einbauzustand | 100 | Zweirad |
| 11 | Längsachse | 101 | Vorderrad |
| 12 | Felgenkontaktfläche | 102 | Hinterrad |
| 13 | konkaver Felgenboden | 103 | Rahmen |
| 14 | Außenseite | 104 | Federgabel |
| 15 | Vertiefung | 105 | Dämpfer |
| 16 | Nippelkontaktfläche | 106 | Lenker |
| 17 | Richtung | 107 | Sattel |
| 18 | Breite | 108 | Scheibenbremse |
| 19 | Länge | | |

## Patentansprüche

1. Laufrad (1) für wenigstens teilweise muskelbetriebene Fahrzeuge und insbesondere Zweiräder (100) mit einer Nabe (30) und einer Felge (2) mit einer Mehrzahl an Speichenlöchern (28) und einer Mehrzahl von Speichensystemen (3) zur Verbindung der Nabe (30) mit der Felge (2),
wobei ein Speichensystem (3) wenigstens eine Speiche (4) und einen Speichennippel (5) umfasst,
wobei wenigstens eine Verstärkungseinheit (6) mit einem Durchgangsloch (7) zwischen der Felge (2) und dem Speichennippel (5) vorgesehen ist,
wobei die Verstärkungseinheit (6) eine konvexe innere Felgenkontaktfläche (12) zur Anlage an einem daran angepassten konkaven Ausrichtbereich (13) der Felge (2) umfasst, und wobei die Verstärkungseinheit (6) eine konkav ausgebildete Außenseite (14) umfasst, an welcher eine Nippelaufnahme (9) an einer Vertiefung (15) mit einer stärker gekrümmten konkaven Nippelkontaktfläche (16) zur Aufnahme eines entsprechend angepassten konvexen Auflagebereichs (17) des Speichennippels (5) vorgesehen ist,
**dadurch gekennzeichnet,**
**dass** die Verstärkungseinheit (6) scheibenartig und um wenigstens eine Längsachse (11) in Umfangsrichtung gekrümmt ausgebildet ist, und dass sich die Dicke (8) der Verstärkungseinheit (6) abgesehen von der verjüngten zentralen Nippelaufnahme (9) über der gesamten Verstärkungseinheit (6) um weniger als 25% ändert.

2. Laufrad (1) nach Anspruch 1, wobei eine maximale Dicke (20) der Verstärkungseinheit (6) kleiner als ein maximaler Durchmesser (32) einer Speiche ist.

3. Laufrad (1) nach wenigstens einem der vorhergehenden Ansprüche, wobei der Speichennippel (5) durch ein Speichenloch (28) in der Felge radial nach innen übersteht.

4. Laufrad (1) nach wenigstens einem der vorhergehenden Ansprüche, wobei die Anzahl der Speichennippel größer als die Anzahl der Verstärkungseinheiten (6) ist.

5. Laufrad (1) nach wenigstens einem der vorhergehenden Ansprüche, wobei unterschiedliche Verstärkungseinheiten (6) vorgesehen sind, die sich in wenigstens einer Abmessung und/oder dem Material unterscheiden.

6. Laufrad (1) nach wenigstens einem der vorhergehenden Ansprüche, wobei die Felge im Wesentlichen aus einem Stranggussprofil besteht.

7. Laufrad (1) nach wenigstens einem der vorhergehenden Ansprüche, wobei sich die stärker gekrümmte konkave Nippelkontaktfläche (16) in einer Richtung (17) quer zu der Längsachse (11) erstreckt.

8. Laufrad (1) nach wenigstens einem der vorhergehenden Ansprüche, wobei eine Dicke (8) der Verstärkungseinheit (6) kleiner als ein Viertel der Breite (18) und kleiner als ein Viertel der Länge (19) der Verstärkungseinheit beträgt.

9. Laufrad (1) nach wenigstens einem der vorhergehenden Ansprüche, wobei wenigstens eine Verstärkungseinheit (6) eine maximale Dicke (20) kleiner 1,5 mm und insbesondere kleiner 1 mm aufweist und/oder wobei wenigstens eine Verstärkungseinheit (6) eine minimale Dicke (21) von wenigstens 0,2 mm aufweist.

10. Laufrad (1) nach wenigstens einem der vorhergehenden Ansprüche, wobei eine minimale Dicke (21) der Verstärkungseinheit (6) an der Nippelaufnahme (9) zwischen 1/3 und 2/3 einer maximalen Dicke (20) der Verstärkungseinheit (6) beträgt.

11. Laufrad (1) nach wenigstens einem der vorhergehenden Ansprüche, wobei eine Länge (19) und/oder eine Breite (18) der Verstärkungseinheit (6) zwischen 7 mm und 14 mm betragen.

12. Laufrad (1) nach wenigstens einem der vorhergehenden Ansprüche, wobei ein Krümmungsradius (23) der konkaven Nippelkontaktfläche (16) der Verstärkungseinheit (6) zwischen 2 mm und 4 mm beträgt und/oder wobei ein Krümmungsradius (22) der konvex ausgebildeten inneren Felgenkontaktfläche (12) der Verstärkungseinheit (6) und/oder ein Krümmungsradius (23) der konkav ausgebildeten Außenseite (14) der Verstärkungseinheit zwischen 4 mm und 20 mm beträgt.

13. Laufrad (1) nach wenigstens einem der vorhergehenden Ansprüche, wobei die Felge (2) als Hohlkammerfelge ausgebildet ist und eine Breite (24) zwischen 16 mm und 38 mm und eine Höhe (25) von mindestens 18 mm und insbesondere zwischen 20 mm und 50 mm aufweist.

14. Laufrad (1) nach wenigstens einem der vorhergehenden Ansprüche, wobei der Speichennippel (5) einen Kugelkopf (26) und wenigstens einen nach innen durch das Speichenloch (28) überstehenden Werkzeuganschluss (27) aufweist.

## Claims

1. Wheel (1) for at least partially muscle-powered vehicles and in particular two-wheeled vehicles (100) comprising a hub (30) and a rim (2) having a plurality of spoke holes (28) and a plurality of spoke systems (3) for connecting the hub (30) with the rim (2),
wherein a spoke system (3) comprises at least one spoke (4) and a spoke nipple (5),
wherein at least one reinforcing unit (6) is provided with a through hole (7) between the rim (2) and the spoke nipple (5), wherein the reinforcing unit (6) comprises a convex inner rim contact surface (12) for resting on a concave alignment area (13) of the rim (2) matched thereto, and wherein the reinforcing unit (6) comprises a concave outside surface (14) at which a nipple accommodation (9) is provided at a depression (15) having a concave nipple contact surface (16) with a narrower curvature to accommodate a matched, convex supporting area (17) of the spoke nipple (5),
**characterized in that** the reinforcing unit (6) is a disk type and is configured curved in the peripheral direction about at least one longitudinal axis (11) and that the thickness (8) of the reinforcing unit (6), apart from the tapered down, central nipple accommodation (9), varies over the entire reinforcing unit (6) by less than 25%.

2. The wheel (1) according to claim 1 wherein a maximum thickness (20) of the reinforcing unit (6) is smaller than a maximum diameter (32) of a spoke.

3. The wheel (1) according to at least one of the preceding claims wherein the spoke nipple (5) projects radially inwardly through a spoke hole (28) in the rim.

4. The wheel (1) according to at least one of the preceding claims wherein the quantity of the spoke nipples is larger than the quantity of the reinforcing units (6).

5. The wheel (1) according to at least one of the preceding claims wherein different reinforcing units (6) are provided which differ in at least one dimension and/or in the material.

6. The wheel (1) according to at least one of the preceding claims wherein the rim substantially consists of an extruded profile.

7. The wheel (1) according to at least one of the preceding claims wherein the concave nipple contact surface (16) having the narrower curve extends in a direction (17) transverse to the longitudinal axis (11).

8. The wheel (1) according to at least one of the preceding claims wherein a thickness (8) of the reinforcing unit (6) is smaller than one fourth of the width (18) and smaller than one fourth of the length (19) of the reinforcing unit.

9. The wheel (1) according to at least one of the preceding claims wherein at least one reinforcing unit (6) has a maximum thickness (20) of less than 1.5 mm and in particular less than 1 mm and/or wherein at least one reinforcing unit (6) has a minimum thickness (21) of at least 0.2 mm.

10. The wheel (1) according to at least one of the preceding claims wherein a minimum thickness (21) of the reinforcing unit (6) at the nipple accommodation (9) is between 1/3 and 2/3 of a maximum thickness (20) of the reinforcing unit (6).

11. The wheel (1) according to at least one of the preceding claims wherein a length (19) and/or a width (18) of the reinforcing unit (6) is between 7 mm and 14 mm.

12. The wheel (1) according to at least one of the preceding claims wherein a radius of curvature (23) of the concave nipple contact surface (16) of the reinforcing unit (6) is between 2 mm and 4 mm and/or wherein a radius of curvature (22) of the convex inner rim contact surface (12) of the reinforcing unit (6) and/or a radius of curvature (23) of the concave outside surface (14) of the reinforcing unit is between 4 mm and 20 mm.

13. The wheel (1) according to at least one of the preceding claims wherein the rim (2) is configured as a hollow rim and has a width (24) between 16 mm and 38 mm and a height (25) of at least 18 mm and in particular between 20 mm and 50 mm.

14. The wheel (1) according to at least one of the preceding claims wherein the spoke nipple (5) has a spherical head (26) and at least one tool engagement point (27) projecting inwardly through the spoke hole (28).

## Revendications

1. Roue (1) pour véhicule entraîné au moins partiellement par force musculaire et notamment pour deux roues (100) avec un moyeu (30) et une jante (2) dotée d'une pluralité de trous de rayons (28) et d'une pluralité de systèmes de rayons (3) pour relier le moyeu (30) à la jante (2), un système de rayons (3) comprenant au moins un rayon (4) et un écrou de rayon (5),
au moins une unité de renforcement (6) pourvue d'un trou de passage (7) entre la jante (2) et l'écrou de rayon (5) étant prévue,
l'unité de renforcement (6) comprenant une surface de contact de jante (12) intérieure convexe destinée à être appliquée à une zone d'alignement (13) concave correspondante de la jante (2), et l'unité de renforcement (6) comprenant une face extérieure (14) de forme concave sur laquelle est prévue une réception d'écrou (9) à un renfoncement (15) pourvu d'une surface de contact d'écrou (16) concave de courbure plus prononcée pour recevoir une zone d'application (17) convexe, de forme adaptée de manière correspondante, de l'écrou de rayon (5),
**caractérisée en ce**
**que** l'unité de renforcement (6) est conçue sous forme de rondelle et courbée au moins autour d'un axe longitudinal (11) dans le sens de la circonférence, et que l'épaisseur (8) de ladite unité de renforcement (6) ne change pas, sur toute ladite unité de renforcement (6), de plus de 25 %, mis à part le rétrécissement de la déception d'écrou (9) centrale.

2. Roue (1) selon la revendication 1, une épaisseur maximale (20) de ladite unité de renforcement (6) étant inférieure à un diamètre maximal (32) d'un rayon.

3. Roue (1) selon au moins l'une quelconque des revendications précédentes, l'écrou de rayon (5) étant radialement en saillie vers l'intérieur au travers d'un trou de rayon (28) dans la jante.

4. Roue (1) selon au moins l'une quelconque des revendications précédentes, le nombre des écrous de rayons étant supérieur au nombre des unités de renforcement (6).

5. Roue (1) selon au moins l'une quelconque des revendications précédentes, des unités de renforcement (6) différentes étant prévues, lesquelles se distinguent l'une de l'autre par au moins une dimension et/ou leur matériau.

6. Roue (1) selon au moins l'une quelconque des revendications précédentes, la jante étant sensiblement constituée d'un profilé de coulée continue.

7. Roue (1) selon au moins l'une quelconque des revendications précédentes, la surface de contact de l'écrou (16) concave de courbure plus prononcée s'étendant dans un sens (17) perpendiculaire à l'axe longitudinal (11).

8. Roue (1) selon au moins l'une quelconque des revendications précédentes, une épaisseur (8) de ladite unité de renforcement (6) étant inférieure à un quart de la largeur (18) et inférieure à un quart de la longueur (19) de l'unité de renforcement.

9. Roue (1) selon au moins l'une quelconque des revendications précédentes, au moins une unité de renforcement (6) présentant une épaisseur maximale (20) inférieure à 1,5 mm et notamment inférieure à 1 mm, et/ou au moins une unité de renforcement (6) présentant une épaisseur minimale (21) d'au moins 0,2 mm.

10. Roue (1) selon au moins l'une quelconque des revendications précédentes, une épaisseur minimale (21) de ladite unité de renforcement (6) au niveau de la réception de l'écrou (9) mesurant entre 1/3 et 2/3 de l'épaisseur maximale (20) de ladite unité de renforcement (6).

11. Roue (1) selon au moins l'une quelconque des revendications précédentes, une longueur (19) et/ou une largeur (18) de ladite unité de renforcement (6) mesurant entre 7 mm et 14 mm.

12. Roue (1) selon au moins l'une quelconque des revendications précédentes, un rayon de courbure (23) de la surface de contact d'écrou concave (16) de ladite unité de renforcement (6) mesurant entre 2 mm et 4 mm, et/ou un rayon de courbure (22) de la surface intérieure, de forme convexe, de contact de la jante (12) de ladite unité de renforcement (6) et/ou un rayon de courbure (23) de la face extérieure (14) de forme concave de ladite unité de renforcement (6) mesurant entre 4 mm et 20 mm.

13. Roue (1) selon au moins l'une quelconque des revendications précédentes, la jante (2) étant conçue sous la forme d'une jante à chambre creuse et présentant une largeur (24) entre 16 mm et 38 mm ainsi qu'une hauteur (25) d'au moins 18 mm et notamment entre 20 mm et 50 mm.

14. Roue (1) selon au moins l'une quelconque des revendications précédentes, l'écrou de rayon (5) présentant un embout sphérique (26) et au moins un raccordement d'outil (27) en saillie vers l'intérieur au travers du trou de rayon (28).
